# EUROPEAN PATENT SPECIFICATION

(11) **EP 2 570 057 B1**
(45) Date of publication and mention of the grant of the patent: **01.04.2015**
(21) Application number: 12184644.8
(22) Date of filing: 17.09.2012
(51) Int. Cl.: A47J 31/057, A47J 31/06

(54) **Improved filter coffee machine and hopper thereof**
Verbesserte Filterkaffeemaschine und Trichter dafür
Machine à café à filtre amélioré et sa trémie

(30) Priority: 16.09.2011 GB 201116067
(43) Date of publication of application: 20.03.2013
(73) Proprietor: Spectrum Brands (UK) Limited, Manchester, M35 0HS (GB)
(72) Inventor: Saba, Simon, Manchester, M35 0HS (GB)
(74) Representative: Appleyard Lees

(56) References cited:
- US-A- 5 389 253
- US-A1- 2006 180 030

## Description

The present invention relates to filter coffee machines of the type where hot water is filtered through coffee beans held in a filter, and in particular, although not exclusively, to a hopper for holding the filter.

Filter coffee machines are known. Generally, the machine includes a hot water supply that is ejected or sprayed from a top of the machine into a hopper. The hopper is arranged to hold a filter within which ground coffee beans are inserted. The hot water infuses through the ground beans as it filters under gravity and into a receptacle for consumption.

Known filter coffee machines use a variety of filters. For example, filter paper can be used or washable filter baskets or liners can be supplied. The filters come in a range of shapes and sizes to match available hoppers and consumer requirements. For instance, in the European market, cone shaped filters are predominantly used whereas in the US market cup cake filters having a flat bottom are favoured. Consequently, filter coffee machine manufacturers have to produce different models and hoppers for the different markets.

Some know filter coffee machines offer an ability to select the amount of coffee desired. That is, for instance, a four cup dispense or a six cup dispense can be selected. The user then inserts the amount of ground coffee corresponding to the dispensing amount, for instance one spoon per cup. In this way, ground coffee, water, and the energy to heat surplus water is not wasted in making more coffee than is required. However, known filters and hoppers are a fixed size and therefore, it has been found that when a lesser amount of coffee is inserted in the filter the coffee quality can be reduced. Often consumers end up filling the filter with more coffee than is required therefore leading to wastage. The problem is exaggerated when dispensing small volumes, such as one or two cups, from a hopper optimised for larger volume, such as say four or six cups.

US 2006/180030 discloses a hot beverage maker brew basket adaptor.

US 5 389 253 discloses funnels for use with large drums.

It is an object of the present invention to attempt to overcome at least one of the above or other disadvantages. It is a further aim to provide a filter coffee machine and hopper for use therein that is able to accommodate different types and sizes of filter.

According to the present invention there is provided a filter coffee machine, a hopper for use therein and a method of using the filter coffee machine as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 is a front perspective view of a filter coffee machine according to an exemplary embodiment;
Figure 2 is a side perspective view of Figure 1;
Figure 3 is a side perspective view of the filter coffee machine of Figure 1 showing a hopper lid in an open position;
Figures 4 and 5 are front and top perspective views respectively of a hopper;
Figures 6 and 7 are top perspective views of exemplary hopper embodiments showing a filter insert in deployed and stowed positions respectively; and
Figures 8 and 9 are top perspective views of a hopper according to a further exemplary embodiment showing a first filter insert in a stowed position and a second filter insert in deployed and stowed positions respectively.

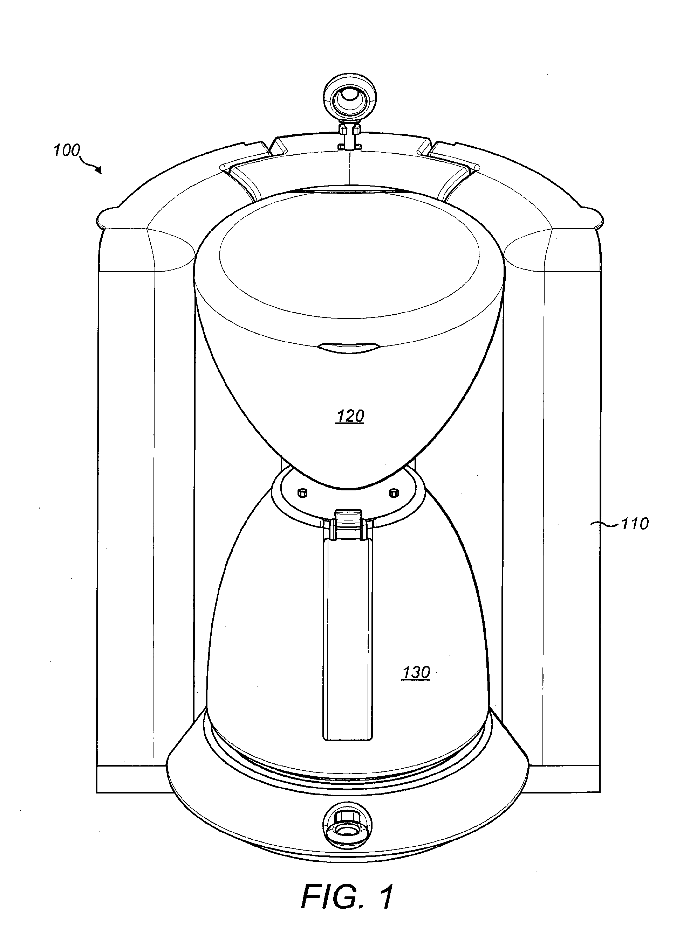

Referring to Figure 1, an exemplary filter coffee machine 100 is shown. The filter coffee machine 100 comprises a water supply unit 110, a filter unit 120 and a receptacle for receiving coffee such as a carafe 130.

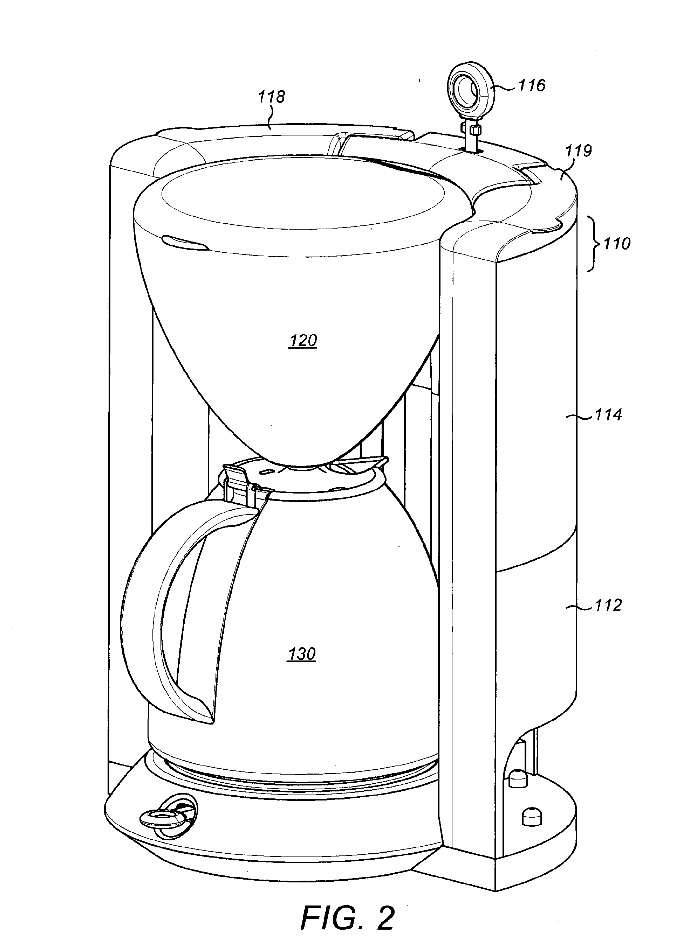

The water supply unit 110 supplies heated water to the filter unit 120. Suitably therefore, the water supply unit 110 includes a first water tank 112 having a heating unit (not shown) arranged therein to heat water within the first water tank 112. When the water reaches a desired temperature it is supplied from the first water tank 112 to the filter unit 120 in a conventional manner. Advantageously, in the exemplary embodiment shown and with reference to Figure 2, the water supply unit 110 also comprises a second water tank 114. The second water tank 114 includes a controllable outlet for supplying a controlled volume of water to the first water tank. Consequently, a control means, shown in the exemplary embodiment as plunger 116, is arranged to be operated to dispense a controlled volume of water from the second water tank 114 to the first water tank 112 for heating. It will therefore be appreciated that only the desired volume of water is heated and energy is not therefore wasted heating unwanted water. Moreover, the controlled filling of the first water tank 112 is made more convenient and with improved accuracy. Advantageously, the second water tank may be removable from the filter coffee machine 100 for ease of filling. Moreover, the second water tank 114 may be compartmentalised, for instance, two or more compartments may be provided. Each compartment may supply a common outlet of the second water tank 114. Here, each compartment may be filled from a separate port. The or each port may be covered by a lid, for instance as shown in Figure 2, first and second lids 118, 119.

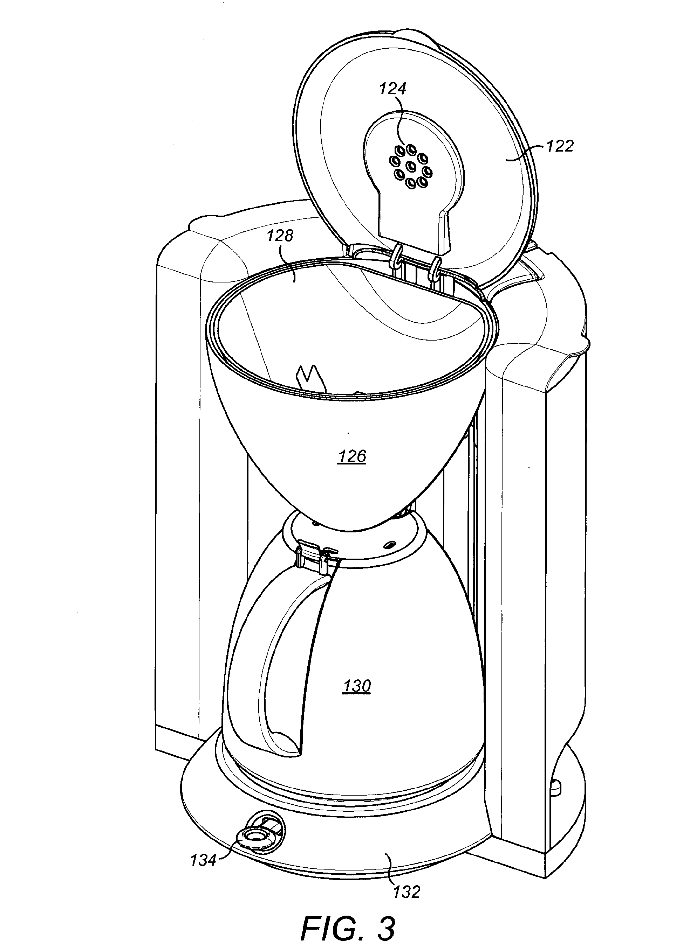

The filter unit 120 is described in more detail with reference to Figure 3. The filter unit 120 includes a lid 122. The lid may be in accordance with known coffee filter machines. For instance, in the exemplary embodiment, the lid 122 is able to be pivoted from a closed position (Figures 1 and 2) to an open position (Figure 3) to allow access to the inside of the filter unit. The lid 122 also includes a dispensing nozzle 124 that is connected to the first water tank for dispensing the heated water there from. A hopper housing 126 is provided for holding a hopper 128. The hopper 126 is removable from the hopper housing 128 and therefore filter coffee machine 100 for cleaning purposes, however, if not required to be removable, the hopper housing 126 and hopper 128 could be integral or the same part. In use a filter is inserted into the hopper and filled with a desired amount of coffee. The lid 122 is closed and hot water sprayed from the nozzle 124, over the ground coffee, to filter down through the coffee beans in order to infuse. A valve (not shown) is arranged at the bottom of the hopper housing 126 to dispense the infused water (coffee) to the carafe 130. An aperture (not shown) is therefore provided in the hopper 128 to allow the coffee to drain. The valve and aperture may be substantially in accordance with known filter coffee machines.

In the exemplary embodiment shown in the Figures, the carafe 130 is shown sitting on a hot plate 132 for keeping the dispensed coffee warm. The hot plate is shown as including a power switch 134 for operating the filter coffee machine. The carafe 130, hot plate 132 and power switch 134 may be substantially in accordance with known filter coffee machines and so further explanation is omitted.

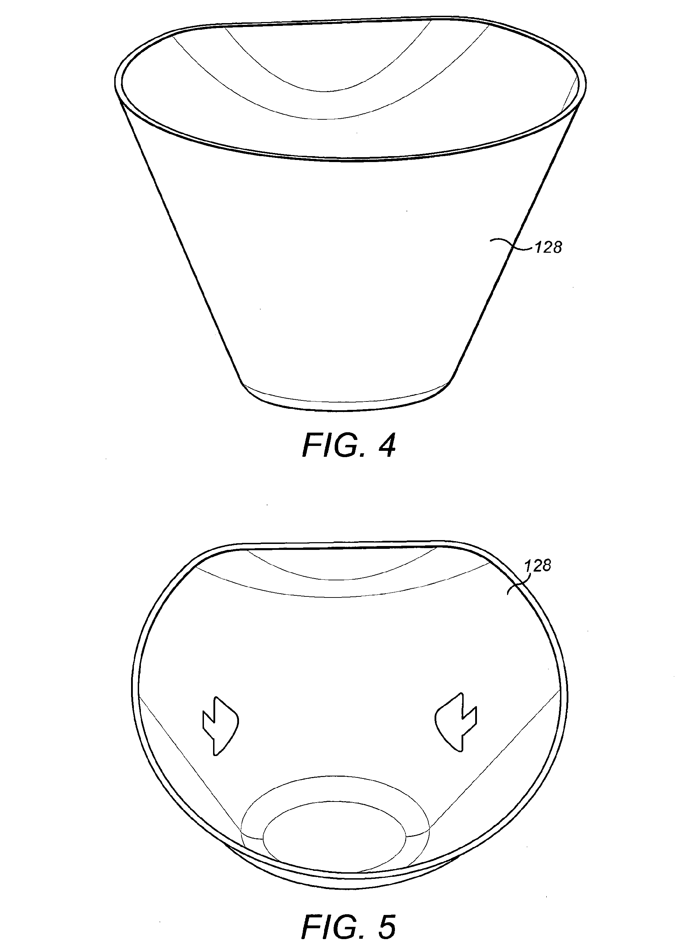

Figures 4 and 5 show a conventional hopper 128. The hopper 128 is typically formed from a plastic material and is generally of a tapered shape to encourage water to filter down towards the aperture (not shown) and also so as to provide a support for filter paper to rest against in order to prevent collapse of the filter paper. The filter, for instance filter paper (not shown), is arranged to line the sides of the hopper 128. The hopper 128 is optimised for dispensing a particular volume of coffee, wherein the amount of ground coffee fills a substantial portion of the filter, for instance at least half or at least two thirds of the filter. It has been found that when dispensing volumes of coffee having a volume less than the optimised volume, the coffee quality deteriorates. It has been found that the deterioration in coffee quality is a result of the hot water infusing through the ground coffee for a reduced time span. That is, because a smaller amount of ground coffee is inserted into to a filter having a same size, the ground coffee has a lower depth. The hot water does not therefore filter through a sufficient distance of ground coffee to correctly infuse.

Experiments with altering the size of the filters to increase the height of ground coffee when dispensing small volumes of coffee has improved the coffee quality, however, as the filter paper becomes wet, it looses form and if not supported can collapse, which prevents correct operation. Consequently an exemplary hopper 200 is provided. The hopper 200 may be provided together with a filter coffee machine or separately, for instance as a replacement of retro fit.

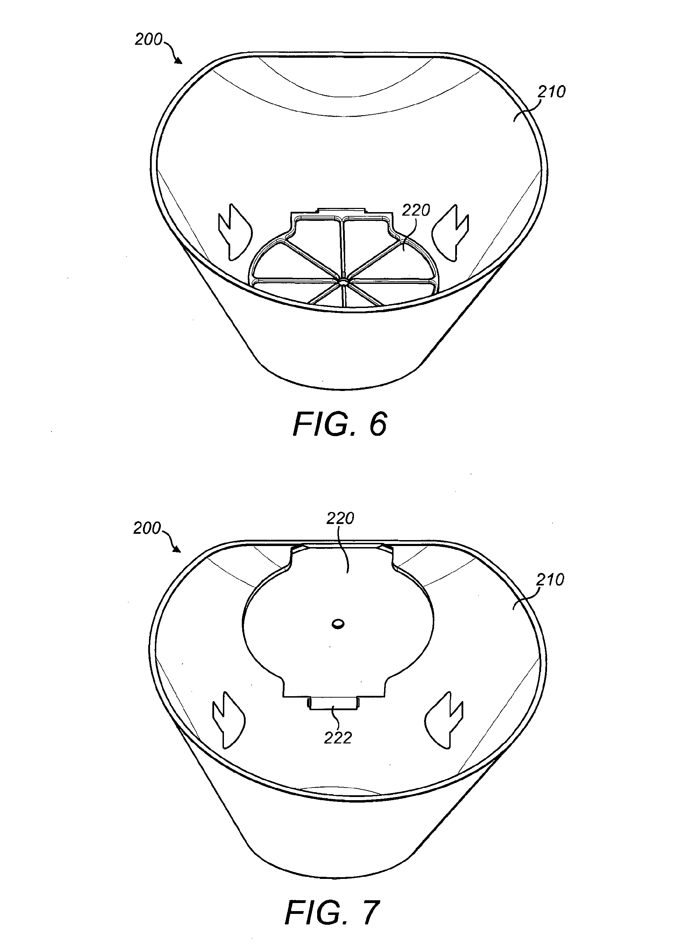

Referring to Figure 6, an exemplary hopper 200 is shown. The hopper comprises a hopper body 210 and a first insert 220. The insert 220 is suitable for adapting the hopper body 210 to support a different filter size or shape. For instance, the hopper body is substantially as described above and adapted for receiving a first sized of filter cone, that when fitted lines the sides of the hopper body 210. The insert 220 is able to be arranged in a deployed position (as shown in Figure 6) wherein the insert is arranged to change the size or shape of the inside of the hopper. Whilst the insert may rest against the sides of the hopper, relying on the tapered nature of the hopper body to retain it in place, suitably, and so as to allow the insert to positively located in a correct position, the inside of the hopper body may be provided with a support such as a ledge or stop for supporting the insert. In the exemplary embodiment shown in Figure 6, the insert 220 is adapted to provide a flat surface to allow a cup cake filter to be correctly supported. The insert 220 may be adapted to replicate a flat surface of known hoppers adapted to support cup cake filters. Consequently, by deploying the insert 220, the hopper body 210 can be adapted from being suitable for supporting a cone filter to being suitable for supporting a cup cake filter by deploying the insert. Consequently, manufacturers of filter coffee machines can manufacture a single hopper and adapt the hopper for a particular market by providing an insert. It will be appreciated from the description herein that the insert may have different configurations dependant on the application. Furthermore, two or more inserts may be provided so that the hopper body can be adapted to be suitable for supporting three or more types or sizes of filter.

Although the inserts 220 may be separate to the hopper, and, for instance stored on the coffee machine when not in use, it is advantageous if the inserts are connected to the hopper body 210 so that they do not become lost and are easily accessible. Consequently, as shown in the exemplary embodiment shown in Figure 7, the first insert 220 is moveably connected to the hopper body 210, though it may be moveably connected to other parts of the filter coffee machine such as the lid, so as to be moveable between a deployed position, in which the insert changes the shape or size of the inside of the hopper body 210, and a stowed position, in which the insert 220 does not substantially affect the size or shape of the inside of the hopper body 210. Suitably, and as shown in the Figures, the first insert 220 is connected to the hopper body 210 by a pivot 222. Suitably, the pivot is arranged to have an axis parallel with a plane of the aperture (not shown) at the bottom of the hopper 200. In the stowed position, the insert is pivoted to lie flat against the sides of the hopper body 210. When pivoted to the deployed position, the insert is arranged substantially across the hopper body 210. Again, whilst the insert may be supported in the deployed position by a portion of the insert abutting a side wall of the hopper body 210, a ridge or stop may be provided against which the insert can rest. That is the ridge or stop may constrict the size of the hopper body so that the insert rests on the top of said ridge or stop to prevent further movement away from the stowed position.

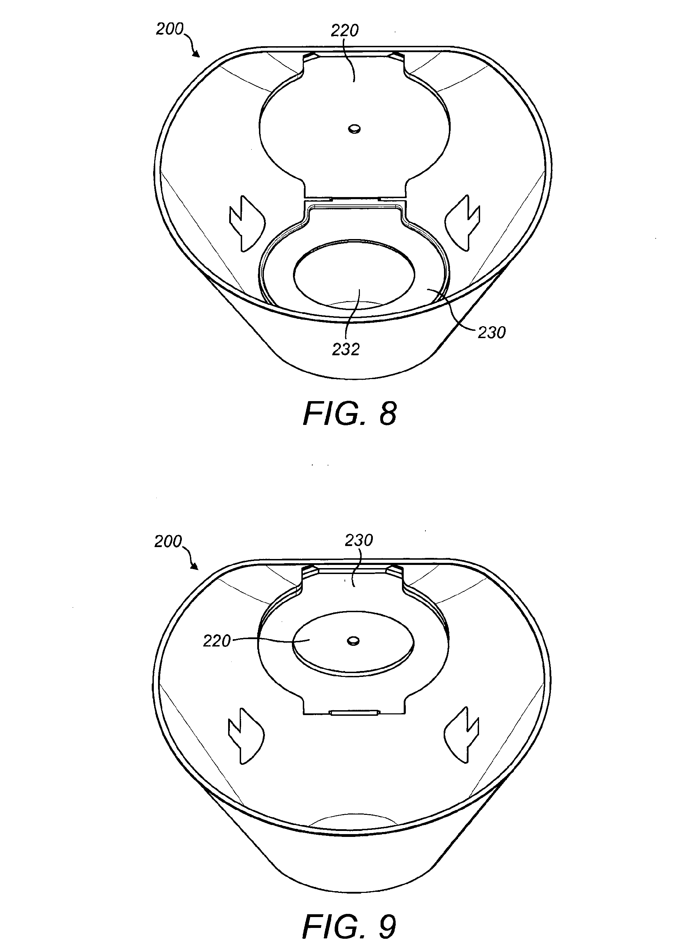

Figure 8 shows a further exemplary embodiment wherein first and second inserts are provided. As in the previous embodiment, the first insert 220 is adapted to support a cup cake filter, whereas the second insert 230 is adapted to support a reduced sized cone filter. However, three or more inserts may be provided. Here, for instance a third insert may be arranged to support a mid sized cone filter. It will be appreciated that any different number and configurations of inserts are envisaged dependent on the requirements. Furthermore, each insert may be moveably connected to the hopper body 210 or separate there from and again, different configurations are envisaged. Where three or more moveably attached inserts are provided, the order is required to be such that each insert can be deployed separately. That is, where for instance each insert is pivotally moveable from a common pivot, the mid sized cone insert should be arranged beneath a smaller sized cone insert so that when both inserts are deployed, only the upper insert has a noticeable affect on the size and shape of the hopper body.

In Figure 9, the inserts are shown in the stowed position. Suitably, each insert is pivoted to the hopper body. Whilst separate pivots may be provided for each insert, in the exemplary embodiments shown in Figure 8 and 9, a common pivot axis is provided for each insert.

The inserts suitable for adapting the hopper 200 for supporting a reduced sized cone filter include a aperture 232 in order to constrict the cross sectional size of the hopper. It has been found that supporting the cone filter in an aperture provides an adequate support to prevent the filter paper collapsing. However, it is preferable if the aperture is sized so as to support the filter cone above at least a third of the height of the filter cone or above at least half the height of the filter cone. In the exemplary embodiments, the aperture is shown as suitably being elliptical.

When the filter coffee machine includes inserts to adapt the hopper to be suitable for different sized filter cones so that small volumes of ground coffee can be used without adversely reducing the height of the ground coffee, it is necessary to provide different sizes of cone filters. Whilst it is envisaged that filter suppliers may adapt to demand and supply different sized filter cones, according to an exemplary method, a cone filter is reduced in size by folding the filter cone in order to close off a portion of the filter cone. That is, cone-shaped filters are generally supplied flat, wherein two opposed creases are formed so that the flat filter forms a V-shape. Here, by forming a crease to fold back one of the edges of the 'V' over itself, when the cone is opened out, a reduced volume filter is provided. For instance, if the crease runs from a tip of the cone, a reduced sized cone is formed. Consequently, ground coffee can be filled in to only a portion of the filter cone.

Although preferred embodiment(s) of the present invention have been shown and described, it will be appreciated by those skilled in the art that changes may be made without departing from the scope of the invention as defined in the claims.

## Claims

1. A filter coffee machine (100) having a hopper (128) and at least one insert (220,230), wherein each insert is adapted to be arranged in a deployed position, wherein said insert changes the shape or size of an inside of the hopper, and a stowed position, wherein said insert does not affect the shape or size of the inside of the hopper;
**characterized in that** a plurality of inserts (220, 230) are provided, each insert being adapted to change the shape or size of the inside of the hopper (128) in order to support a different size or shape filter;
wherein each insert (220, 230) is movably attached to the filter coffee machine;
wherein each insert (220, 230) is pivoted to the filter coffee machine in order to move between the stowed and deployed positions; and
wherein each insert (220, 230) is pivoted at a common axis.

2. The filter coffee machine (100) of claim 1 , wherein the hopper (128) is adapted to support a cone-type filter and one of the inserts (220) is adapted to provide a flat support when in the deployed position to support a cup-cake type filter.

3. The filter coffee machine (100) of claim 1 or claim 2 , wherein one of the inserts (230) includes an aperture, wherein, when arranged in the deployed position, said aperture provides a support for a cone-type filter.

4. The filter coffee machine (100) of claim 3, wherein a second insert (230) includes an aperture and the aperture in the second insert is sized differently to the aperture in the other said insert (220), so as to support a different sized cone-type filter.

5. The filter coffee machine (100) of any of claims 2 to 4, wherein one of the plurality of inserts (220, 230) is adapted to overlay a second insert when both inserts are in the deployed position.

6. A hopper (128) for a filter coffee machine (100), the hopper being provided with at least one insert (220, 230), wherein each insert is adapted to be arranged in a deployed position, wherein said insert changes the shape or size of an inside of the hopper, and a stowed position, wherein said insert does not affect the shape or size of the inside of the hopper;
**characterized in that** a plurality of inserts (220, 230) are provided, each insert being adapted to change the shape or size of the inside of the hopper (128) in order to support a different size or shape filter;
wherein each insert (220, 230) is movably attached to the filter coffee machine;
wherein each insert (220, 230) is pivoted to the filter coffee machine in order to move between the stowed and deployed positions; and
wherein each insert (220, 230) is pivoted at a common axis.

7. The hopper (128) of claim 5 wherein the hopper is adapted to be suitable for use in a filter coffee machine (100) as claimed in any of claims 1 to 5.

8. A method of using a filter coffee machine (100) having a hopper (128) and at least one deployable insert (220,230), the method comprising moving each insert between a deployed position and a stowed position so as to adapt the hopper to support a different sized or shaped filter, wherein each insert is adapted so that when in the deployed position, said insert changes the shape or size of an inside of the hopper, and in the stowed position, said insert does not affect the shape or size of the inside of the hopper;
**characterized in that** a plurality of inserts (220, 230) are provided, each insert being adapted to change the shape or size of the inside of the hopper (128) in order to support a different size or shape filter;
wherein each insert (220, 230) is movably attached to the filter coffee machine;
wherein each insert (220, 230) is pivoted to the filter coffee machine in order to move between the stowed and deployed positions; and
wherein each insert (220, 230) is pivoted at a common axis.

9. The method of claim 8 wherein the method comprises folding a cone-shaped insert (220, 230) in order to close a position of the cone in order to reduce the size of the cone-shaped filter.

## Patentansprüche

1. Filterkaffeemaschine (100) mit einem Trichter (128) und mindestens einem Einsatz (220, 230), wobei jeder Einsatz dazu geeignet ist, in einer eingesetzten Position, in der der Einsatz die Form oder Größe einer Innenseite des Trichters verändert, und einer verstauten Position, in der der Einsatz sich nicht auf die Form oder Größe der Innenseite des Trichters auswirkt, angeordnet zu sein,
**dadurch gekennzeichnet, dass** mehrere Einsätze (220, 230) vorgesehen sind, wobei jeder Einsatz dazu geeignet ist, die Form oder Größe der Innenseite des Trichters (128) zu verändern, um einen Filter mit anderer Größe oder Form zu stützen;
wobei jeder Einsatz (220, 230) beweglich an der Filterkaffeemaschine angebracht ist;
wobei jeder Einsatz (220, 230) zur Bewegung zwischen der verstauten und der eingesetzten Position gelenkig an der Filterkaffeemaschine angebracht ist; und
wobei jeder Einsatz (220, 230) um eine gemeinsame Achse schwenkt.

2. Filterkaffeemaschine (100) nach Anspruch 1, wobei der Trichter (128) dazu geeignet ist, einen kegelartigen Filter zu stützen, und einer der Einsätze (220) dazu geeignet ist, eine flache Stütze zum Stützen eines napfartigen Filters vorzusehen, wenn er sich in der eingesetzten Position befindet.

3. Filterkaffeemaschine (100) nach einem der Ansprüche 1 oder 2, wobei einer der Einsätze (230) eine Öffnung enthält, wobei, wenn er in der eingesetzten Position angeordnet ist, die Öffnung eine Stütze für einen kegelartigen Filter vorsieht.

4. Filterkaffeemaschine (100) nach Anspruch 3, wobei ein zweiter Einsatz (230) eine Öffnung enthält und die Öffnung im zweiten Einsatz anders als die Öffnung im anderen Einsatz (220) bemessen ist, um einen kegelartigen Filter mit anderer Größe zu stützen.

5. Filterkaffeemaschine (100) nach einem der Ansprüche 2 bis 4, wobei einer der mehreren Einsätze (220, 230) dazu geeignet ist, einen zweiten Einsatz zu überlagern, wenn sich beide Einsätze in der eingesetzten Position befinden.

6. Trichter (128) für eine Filterkaffeemaschine (100), wobei der Trichter mit mindestens einem Einsatz (220, 230) versehen ist, wobei jeder Einsatz dazu geeignet ist, in einer eingesetzten Position, in der der Einsatz die Form oder Größe einer Innenseite des Trichters verändert, und einer verstauten Position, in der der Einsatz sich nicht auf die Form oder Größe der Innenseite des Trichters auswirkt, angeordnet zu sein;
**dadurch gekennzeichnet, dass** mehrere Einsätze (220, 230) vorgesehen sind, wobei jeder Einsatz dazu geeignet ist, die Form oder Größe der Innenseite des Trichters (128) zu verändern, um einen Filter mit anderer Größe oder Form zu stützen;
wobei jeder Einsatz (220, 230) beweglich an der Filterkaffeemaschine angebracht ist;
wobei jeder Einsatz (220, 230) zur Bewegung zwischen der verstauten und der eingesetzten Position gelenkig an der Filterkaffeemaschine angebracht ist; und
wobei jeder Einsatz (220, 230) um eine gemeinsame Achse schwenkt.

7. Trichter (128) nach Anspruch 5, wobei der Trichter dazu geeignet ist, zum Gebrauch mit einer Filterkaffeemaschine (100) gemäß einem der Ansprüche 1 bis 5 tauglich zu sein.

8. Verfahren zum Benutzen einer Filterkaffeemaschine (100) mit einem Trichter (128) und mindestens einem einsetzbaren Einsatz (220, 230), das Verfahren aufweisend das Bewegen jedes Einsatzes zwischen einer eingesetzten Position und einer verstauten Position, um den Trichter zum Stützen eines anders bemessenen oder geformten Filters anzupassen, wobei jeder Einsatz derart geeignet ist, dass, wenn er sich in der eingesetzten Position befindet, der Einsatz die Form oder Größe einer Innenseite des Trichters verändert, und in der verstauten Position der Einsatz sich nicht auf die Form oder Größe der Innenseite des Trichters auswirkt,
**dadurch gekennzeichnet, dass** mehrere Einsätze (220, 230) vorgesehen sind, wobei jeder Einsatz dazu geeignet ist, die Form oder Größe der Innenseite des Trichters (128) zu verändern, um einen Filter mit anderer Größe oder Form zu stützen;
wobei jeder Einsatz (220, 230) beweglich an der Filterkaffeemaschine angebracht ist;
wobei jeder Einsatz (220, 230) zur Bewegung zwischen der verstauten und der eingesetzten Position gelenkig an der Filterkaffeemaschine angebracht ist; und
wobei jeder Einsatz (220, 230) um eine gemeinsame Achse schwenkt.

9. Verfahren nach Anspruch 8, wobei das Verfahren das Falten eines kegelförmigen Einsatzes (220, 230) zum Schließen einer Position des Kegels zum Verringern der Größe des kegelförmigen Filters aufweist.

## Revendications

1. Machine à café à filtre (100) ayant une trémie (128) et au moins un insert (220, 230), chaque insert étant adapté pour être agencé dans une position déployée, dans laquelle ledit insert modifie la forme ou la taille d'un intérieur de la trémie, et une position rangée, dans laquelle ledit insert n'affecte pas la forme ou la taille de l'intérieur de la trémie ;
**caractérisée en ce qu'**une pluralité d'inserts (220, 230) sont prévus, chaque insert étant adapté pour modifier la forme ou la taille de l'intérieur de la trémie (128) afin de supporter un filtre de taille ou forme différente ;
chaque insert (220, 230) étant fixé de manière mobile à la machine à café à filtre ;
chaque insert (220, 230) étant pivoté par rapport à la machine à café à filtre pour se déplacer entre les positions rangée et déployée ; et
chaque insert (220, 230) étant pivoté au niveau d'un axe commun.

2. Machine à café à filtre (100) selon la revendication 1, la trémie (128) étant adaptée pour supporter un filtre de type cône et l'un des inserts (220) étant adapté pour fournir un support plat lorsqu'il est dans la position déployée pour supporter un filtre de type panier.

3. Machine à café à filtre (100) selon la revendication 1 ou la revendication 2, l'un des inserts (230) comportant une ouverture, ladite ouverture, lorsqu'elle est agencée dans la position déployée, fournissant un support pour un filtre de type cône.

4. Machine à café à filtre (100) selon la revendication 3, un deuxième insert (230) comportant une ouverture et l'ouverture dans le deuxième insert étant dimensionnée différemment de l'ouverture dans l'autre dit insert (220), de manière à supporter un filtre de type cône de taille différente.

5. Machine à café à filtre (100) selon l'une quelconque des revendications 2 à 4, l'un de la pluralité d'inserts (220, 230) étant adapté pour recouvrir un deuxième insert lorsque les deux inserts sont dans la position déployée.

6. Trémie (128) pour une machine à café à filtre (100), la trémie étant pourvue d'au moins un insert (220, 230), chaque insert étant adapté pour être agencé dans une position déployée, dans laquelle ledit insert modifie la forme ou la taille d'un intérieur de la trémie, et une position rangée, dans laquelle ledit insert n'affecte pas la forme ou la taille de l'intérieur de la trémie ;
**caractérisée en ce qu'**une pluralité d'inserts (220, 230) sont prévus, chaque insert étant adapté pour modifier la forme ou la taille de l'intérieur de la trémie (128) afin de supporter un filtre de taille ou forme différente ;
chaque insert (220, 230) étant fixé de manière mobile à la machine à café à filtre ;
chaque insert (220, 230) étant pivoté par rapport à la machine à café à filtre pour se déplacer entre les positions rangée et déployée ; et
chaque insert (220, 230) étant pivoté au niveau d'un axe commun.

7. Trémie (128) selon la revendication 5, la trémie étant adaptée pour être appropriée pour l'utilisation dans une machine à café à filtre (100) selon l'une quelconque des revendications 1 à 5.

8. Procédé d'utilisation d'une machine à café à filtre (100) ayant une trémie (128) et au moins un insert déployable (220, 230), le procédé comprenant le déplacement de chaque insert chaque insert entre une position déployée et une position rangée, de manière à adapter la trémie pour supporter un filtre de taille ou forme différente, chaque insert étant adapté de telle sorte que, lorsqu'il est dans la position déployée, ledit insert modifie la forme ou la taille d'un intérieur de la trémie, et dans la position déployée, ledit insert n'affecte pas la forme ou la taille de l'intérieur de la trémie ; **caractérisé en ce qu'**une pluralité d'inserts (220, 230) sont prévus, chaque insert étant adapté pour modifier la forme ou la taille de l'intérieur de la trémie (128) afin de supporter un filtre de taille ou forme différente ;
chaque insert (220, 230) étant fixé de manière mobile à la machine à café à filtre ;
chaque insert (220, 230) étant pivoté par rapport à la machine à café à filtre pour se déplacer entre les positions rangée et déployée ; et
chaque insert (220, 230) étant pivoté au niveau d'un axe commun.

9. Procédé selon la revendication 8, le procédé comprenant le pliage d'un insert en forme de cône (220, 230) pour fermer une position du cône pour réduire la taille du filtre en forme de cône.
